# EUROPÄISCHE PATENTSCHRIFT

(11) **EP 4 251 883 B1**
(45) Veröffentlichungstag und Bekanntmachung des Hinweises auf die Patenterteilung: **25.12.2024**
(21) Anmeldenummer: 21824466.3
(22) Anmeldetag: 19.11.2021
(51) Int. Cl.: F04B 39/02, F04B 39/12, F04C 29/02, F01C 21/00, F25B 31/00, G01K 1/14

(54) **VERDICHTER**
COMPRESSOR
COMPRESSEUR

(30) Priorität: 26.11.2020 DE 102020131351
(43) Veröffentlichungstag der Anmeldung: 04.10.2023
(73) Patentinhaber: Viessmann Climate Solutions SE, 35108 Allendorf (DE)
(72) Erfinder: IMMEL, Markus, 35075 Gladenbach (DE); LANG, Eduard, 35108 Allendorf (DE); KAUTZNER, Lars, 35039 Marburg (DE)
(74) Vertreter: Wolf & Wolf Patent- und Rechtanwaltsgesellschaft mbH
(86) Internationale Anmeldenummer: PCT/DE2021/100918
(87) Internationale Veröffentlichungsnummer: WO 2022/111759

(56) Entgegenhaltungen:
- JP-A- H 109 685
- KR-A- 20090 060 930
- US-A1- 2010 028 184

## Beschreibung

Die Erfindung betrifft einen Verdichter gemäß dem Oberbegriff des Patentanspruchs 1.

Ein Verdichter der eingangs genannten Art ist aus dem Dokument JP 10009685 A bekannt. Dieser Verdichter besteht aus einem Verdichtergehäuse, einer am Verdichtergehäuse angeordneten Befestigungseinrichtung, einer mit der Befestigungseinrichtung verbundenen Trägereinrichtung für einen Temperatursensor, wobei die Trägereinrichtung den Temperatursensor gegen eine Wandung des Verdichtergehäuses drückend ausgebildet ist. Die besagte Befestigungseinrichtung dient dabei, und zwar hier und auch bei der noch zu erläuternden erfindungsgemäßen Lösung, zur schwingungsgedämpften Befestigung des Verdichters zum Beispiel an einer Rahmen- oder Gehäusekonstruktion einer Wärmepumpe. Der besagte Temperatursensor dient zur Erfassung der Temperatur des im Verdichter befindlichen Öls. Dieser, also der Sensor, wird mit Hilfe der besagten Trägereinrichtung, und auch dies gilt alles für die erfindungsgemäße Lösung, gegen eine Wandung des Verdichters gedrückt, und zwar dort, wo sich das Öl im Verdichter sammelt, also im sogenannten Ölsammelbereich, der sich bei bestimmungsgemäßen Gebrauch des Verdichters schwerkraftbedingt natürlich an dessen unteren Ende befindet.

Der Erfindung liegt die Aufgabe zugrunde, einen Verdichter der eingangs genannten Art zu verbessern. Insbesondere soll ein Verdichter geschaffen werden, bei dem die Anordnung des Temperatursensors einerseits zu möglichst genauen Messergebnissen führt und andererseits möglichst gut reproduzierbar erfolgen kann, sprich, der Montagevorgang - insbesondere auch beim Austausch des Temperatursensors - immer wieder zu genau den gleichen Kontaktergebnissen zwischen Wandung und Sensor führt.

Diese Aufgabe ist mit einem Verdichter der eingangs genannten Art durch die im Kennzeichen des Patentanspruchs 1 aufgeführten Merkmale gelöst.

Nach der Erfindung ist also vorgesehen, dass die Trägereinrichtung zur mehrfachen Anbindung an die Befestigungseinrichtung mindestens zwei, an unterschiedlichen Seiten des Temperatursensors befindliche Abschnitte aufweist, wobei der Temperatursensor bei bestimmungsgemäßen Gebrauch des Verdichters von unten gegen das Verdichtergehäuse verspannt ausgebildet ist.

Mit anderen Worten zeichnet sich die erfindungsgemäße Lösung somit dadurch aus, dass die Trägereinrichtung nicht nur - wie beim eingangs genannten Stand der Technik - einseitig, und insofern gewissermaßen undefiniert, sondern mindestens über zwei, zueinander distanzierte Abschnitte mit der Befestigungseinrichtung verbunden ausgebildet ist, was dazu führt, dass der Temperatursensor, mit einer genau dosierten Vorspannung gegen die Wandung des Verdichters gedrückt bzw. verspannt ausgebildet ist. Dabei ist, worauf weiter unten auch noch genauer eingegangen wird, außerdem vorgesehen, dass der Temperatursensor bei bestimmungsgemäßen Gebrauch des Verdichters von unten gegen die den Boden des Verdichters bildende Wandung verspannt ausgebildet ist.

Andere vorteilhafte Weiterbildungen des erfindungsgemäßen Verdichters ergeben sich aus den abhängigen Patentansprüchen.

Der Vollständigkeit halber wird noch auf das Dokument US 2010/0028184 A1 hingewiesen, bei dem der Temperatursensor aber am Kopf des Verdichtergehäuses angeordnet ist.

Der erfindungsgemäße Verdichter einschließlich seiner vorteilhaften Weiterbildungen gemäß der abhängigen Patentansprüche wird nachfolgend anhand der zeichnerischen Darstellung zweier Ausführungsbeispiele näher erläutert.

Es zeigt
- Figur 1: den Verdichter mit einer Trägereinrichtung gemäß einem ersten Ausführungsbeispiel in Seitenansicht;
- Figur 2: perspektivisch die Trägereinrichtung des Verdichters gemäß Figur 1;
- Figur 3: die Trägereinrichtung des Verdichters gemäß einem zweiten Ausführungsbeispiel;
- Figur 4: perspektivisch die Trägereinrichtung des Verdichters gemäß Figur 3;

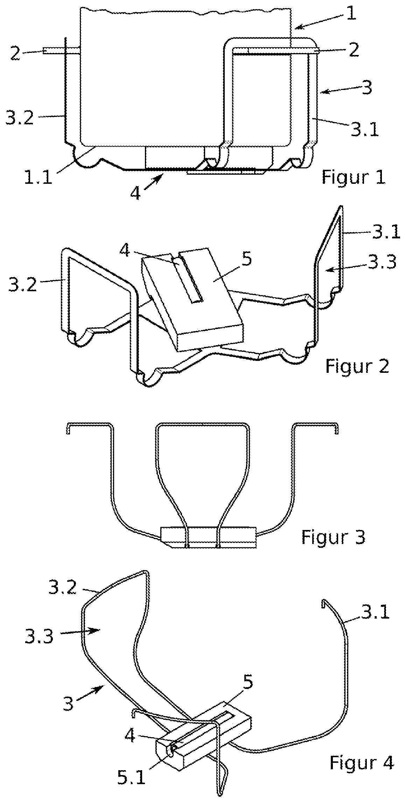

Der erfindungsgemäße Verdichter besteht aus einem Verdichtergehäuse 1, einer einer am Verdichtergehäuse 1 angeordneten Befestigungseinrichtung 2, einer mit der Befestigungseinrichtung 2 verbundenen Trägereinrichtung 3 für einen Temperatursensor 4, wobei die Trägereinrichtung 3 den Temperatursensor 4 gegen eine Wandung 1.1 des Verdichtergehäuses 1 drückend ausgebildet ist, siehe Figur 1.

Wesentlich für den erfindungsgemäßen Verdichter ist nun, dass die Trägereinrichtung 3 zur mehrfachen Anbindung an die Befestigungseinrichtung 2 mindestens zwei, an unterschiedlichen Seiten des Temperatursensors 4 befindliche Abschnitte 3.1, 3.2 aufweist, wobei der Temperatursensor 4 bei bestimmungsgemäßen Gebrauch des Verdichters von unten gegen das Verdichtergehäuse 1 verspannt ausgebildet ist, siehe Figuren 1 bis 4.

Es ist dabei bevorzugt, dass die Befestigungseinrichtung 2 in Form von mindestens zwei, vorzugsweise drei, vom Verdichtergehäuse 1 abstehenden und über dessen Umfang verteilt angeordneten Laschen ausgebildet ist.

Außerdem ist bevorzugt, dass der Temperatursensor 4 bei bestimmungsgemäßen Gebrauch des Verdichters vorzugsweise mittels der mindestens teilweise oberhalb der Befestigungseinrichtung 2 verlaufenden Abschnitte 3.1, 3.2 von unten gegen das Verdichtergehäuse 1, vorzugsweise gegen die einen Boden des Verdichters bildende Wandung 1.1, verspannt ausgebildet ist. Auf diese Weise ist die Position des Temperatursensors 4 am Verdichtergehäuse 1 gut definiert und führt zu reproduzierbaren und vergleichbaren Messergebnissen.

Weiterhin ist die Trägereinrichtung 3 vorzugsweise an der Befestigungseinrichtung 2 eingehängt ausgebildet. Ebenso ist bevorzugt, dass die Befestigungseinrichtung 2 bei bestimmungsgemäßen Gebrauch des Verdichters oberhalb des Temperatursensors 4 angeordnet ist. Dies ermöglicht eine besonders einfache Montage der Trägereinrichtung 3 am Verdichter.

Des Weiteren ist bevorzugt, dass die Trägereinrichtung 3 aus einem Blechstück ausgestanzt und durch Umformen hergestellt ausgebildet ist, siehe Figuren 1 und 2. Alternativ ist bevorzugt, dass die Trägereinrichtung 3 aus Draht hergestellt ausgebildet ist, siehe Figuren 3 und 4. In diesen Fällen kann die Trägereinrichtung also besonders einfach und kostengünstig hergestellt werden, ohne jedoch ihre Effektivität zu verlieren.

Zudem ist in Hinblick auf die Konstruktion der Trägereinrichtung 3 vorzugsweise vorgesehen, dass mindestens einer der Abschnitte 3.1, 3.2 eine Öffnung 3.3 zur Aufnahme der Befestigungseinrichtung 2 aufweist (siehe Figuren 1 bis 4) und/oder dass mindestens einer der Abschnitte 3.1, 3.2 als einseitig offener Haken ausgebildet ist (siehe Figuren 3 und 4). Des Weiteren ist bevorzugt, dass die Abschnitte 3.1, 3.2 als freie Endabschnitte der Trägereinrichtung 3 ausgebildet sind. Ebenso ist bevorzugt, dass die Abschnitte 3.1, 3.2 bei bestimmungsgemäßem Gebrauch des Verdichters am Kontaktbereich mit der Befestigungseinrichtung 2 horizontal verlaufend ausgebildet sind. Dies ermöglicht einen guten Halt der Trägereinrichtung 3 an der Befestigungseinrichtung 2 und verhindert ein Abrutschen der Trägereinrichtung 3.

Des Weiteren ist bevorzugt, dass der Temperatursensor 4 stabförmig ausgebildet ist. Zudem ist der Temperatursensor 4 vorzugsweise mit einem Aufnahmeelement 5 an der Trägereinrichtung 3 befestigt ausgebildet. Dabei weist das Aufnahmeelement 5 vorzugsweise einen zur Form des Temperatursensors 4 passenden und zur Wandung 1.1 hin offenen Aufnahmeschlitz 5.1 für den Temperatursensor 4 auf. Durch die Maßnahme, dass der Aufnahmeschlitz 5.1 zur Wandung 1.1 offen ist, wird ermöglichst, dass der Temperatursensor 4 direkt, also ohne Zwischenraum am Verdichtergehäuse 1 anliegt, was wiederum die Temperaturmessung verbessert. Dabei ist das Aufnahmeelement 5 vorzugsweise aus einem Material mit einer Wärmeleitfähigkeit von weniger als 0,1 W/(mK), insbesondere aus Kunststoff, gebildet. Siehe hierzu auch https://de.wikipedia.org/w/index.php?title=W%C3%A4rmeleitf%C3%A4higkeit&oldid=203331633.

Ferner sei angemerkt, dass die obige Maßgabe, dass die Trägereinrichtung 3 mit der Befestigungseinrichtung 2 verbunden sein soll, nicht nur Verdichter beschreibt, bei denen die Trägereinrichtung 3, wie in den Figuren gezeigt, teilweise auf der Befestigungseinrichtung 2 aufliegt. Es sind damit auch Ausführungsformen umfasst, bei denen Trägereinrichtung 3 und Befestigungseinrichtung 2 durch ein Verbindungselement, wie beispielsweise Schrauben oder Bolzen miteinander verbunden ausgebildet sind.

Der erfindungsgemäße Verdichter gemäß dem Ausführungsbeispiel aus den Figuren 1 und 2 funktioniert wie folgt:
Zunächst wird der Temperatursensor 4 in den Aufnahmeschlitz 5.1 des Aufnahmeelements 5 eingelegt. Nun wird die Trägereinrichtung 3, an der sich das Aufnahmeelement 5 befindet, mit seinen Abschnitten 3.1 und 3.2 so über die Befestigungseinrichtung 2 gezogen, dass die Laschen der Befestigungseinrichtung 2 in den Öffnungen 3.3 der Trägereinrichtung 3 zu liegen kommen und der Temperatursensor 4 die Wandung 1.1 des Verdichtergehäuses 1 berührt. Auf diese Weise wird der Temperatursensor 4 bei jeder Montage des Trägerelements 4 automatisch in der korrekten Position am Verdichtergehäuse 1 angebracht und kann zuverlässige Messergebnisse liefern. Zudem wird dieser Effekt durch die Verwendung eines einfach und kostengünstig herzustellenden Trägerelements 4 gewährleistet.

### Bezugszeichenliste

- 1: Verdichtergehäuse
- 1.1: Wandung
- 2: Befestigungseinrichtung
- 3: Trägereinrichtung
- 3.1: Abschnitt
- 3.2: Abschnitt
- 3.3: Öffnung
- 4: Temperatursensor
- 5: Aufnahmeelement
- 5.1: Aufnahmeschlitz

## Patentansprüche

1. Verdichter, umfassend ein Verdichtergehäuse (1), eine am Verdichtergehäuse (1) angeordnete Befestigungseinrichtung (2), eine mit der Befestigungseinrichtung (2) verbundene Trägereinrichtung (3) für einen Temperatursensor (4), wobei die Trägereinrichtung (3) den Temperatursensor (4) gegen eine Wandung (1.1) des Verdichtergehäuses (1) drückend ausgebildet ist,
**dadurch gekennzeichnet,**
**dass** die Trägereinrichtung (3) zur mehrfachen Anbindung an die Befestigungseinrichtung (2) mindestens zwei, an unterschiedlichen Seiten des Temperatursensors (4) befindliche Abschnitte (3.1, 3.2) aufweist, wobei der Temperatursensor (4) bei bestimmungsgemäßen Gebrauch des Verdichters von unten gegen das Verdichtergehäuse (1) verspannt ausgebildet ist.

2. Verdichter nach Anspruch 1,
**dadurch gekennzeichnet,**
**dass** die Trägereinrichtung (3) an der Befestigungseinrichtung (2) eingehängt ausgebildet ist.

3. Verdichter nach Anspruch 1 oder 2,
**dadurch gekennzeichnet,**
**dass** die Befestigungseinrichtung (2) bei bestimmungsgemäßen Gebrauch des Verdichters oberhalb des Temperatursensors (4) angeordnet ist.

4. Verdichter nach einem der Ansprüche 1 bis 3,
**dadurch gekennzeichnet,**
**dass** die Trägereinrichtung (3) aus einem Blechstück ausgestanzt und durch Umformen hergestellt ausgebildet ist.

5. Verdichter nach einem der Ansprüche 1 bis 3,
**dadurch gekennzeichnet,**
**dass** die Trägereinrichtung (3) aus Draht hergestellt ausgebildet ist.

6. Verdichter nach einem der Ansprüche 1 bis 5,
**dadurch gekennzeichnet,**
**dass** mindestens einer der Abschnitte (3.1, 3.2) eine Öffnung (3.3) zur Aufnahme der Befestigungseinrichtung (2) aufweist.

7. Verdichter nach einem der Ansprüche 1 bis 6,
**dadurch gekennzeichnet,**
**dass** mindestens einer der Abschnitte (3.1, 3.2) als einseitig offener Haken ausgebildet ist.

8. Verdichter nach einem der Ansprüche 1 bis 7,
**dadurch gekennzeichnet,**
**dass** der Temperatursensor (4) mit einem Aufnahmeelement (5) an der Trägereinrichtung (3) befestigt ausgebildet ist.

9. Verdichter nach Anspruch 8,
**dadurch gekennzeichnet,**
**dass** das Aufnahmeelement (5) einen zur Form des Temperatursensors (4) passenden und zur Wandung (1.1) hin offenen Aufnahmeschlitz (5.1) für den Temperatursensor (4) aufweist.

## Claims

1. A compressor comprising a compressor housing (1), a fastening device (2) arranged on the compressor housing (1), and a support device (3) connected to the fastening device (2) for a temperature sensor (4), wherein the support device (3) is designed to press the temperature sensor (4) against a wall (1.1) of the compressor housing (1),
**characterized in that**
the support device (3) has at least two sections (3.1, 3.2) located on different sides of the temperature sensor (4), for repeated connection to the fastening device (2), wherein, when the compressor is used as intended, the temperature sensor (4) is designed to be braced against the compressor housing (1) from below.

2. The compressor according to claim 1,
**characterized in that**
the support device (3) is designed to be suspended on the fastening device (2).

3. The compressor according to claim 1 or 2,
**characterized in that,**
when the compressor is used as intended, the fastening device (2) is arranged above the temperature sensor (4).

4. The compressor according to one of claims 1 to 3,
**characterized in that**
the support device (3) is designed to be stamped from a metal sheet and to be produced by re-shaping.

5. The compressor according to one of claims 1 to 3,
**characterized in that**
the support device (3) is designed to be produced from wire.

6. The compressor according to one of claims 1 to 5,
**characterized in that**
at least one of the sections (3.1, 3.2) has an opening (3.3) for receiving the fastening device (2).

7. The compressor according to one of claims 1 to 6,
**characterized in that**
at least one of the sections (3.1, 3.2) is designed as a hook which is open on one side.

8. The compressor according to one of claims 1 to 7,
**characterized in that**
the temperature sensor (4) is designed to be fastened by a receiving element (5) to the support device (3).

9. The compressor according to claim 8,
**Characterized in that**
the receiving element (5) has a receiving slot (5.1) for the temperature sensor (4), the receiving slot being adapted to the shape of the temperature sensor (4) and being open toward the wall (1.1).

## Revendications

1. Compresseur, comprenant un carter de compresseur (1), un système de fixation (2) placé sur le carter de compresseur (1), un système de support (3) assemblé avec le système de fixation (2) pour un capteur de température (4), le système de support (3) étant constitué de sorte à pousser le capteur de température (4) contre une paroi (1.1) du carter de compresseur (1), **caractérisé en ce que**
pour une connexion multiple au système de fixation (2), le système de support (3) comporte au moins deux sections (3.1, 3.2) se trouvant sur différentes faces du capteur de température (4), lors d'une utilisation conforme du compresseur, le capteur de température (4) étant conçu en étant précontraint par le dessous contre le carter de compresseur (1).

2. Compresseur selon la revendication 1,
**caractérisé en ce que**
le système de support (3) est conçu en étant accroché dans le système de fixation (2).

3. Compresseur selon la revendication 1 ou 2,
**caractérisé en ce que**
lors d'une utilisation conforme du compresseur, le système de fixation (2) est placé au-dessus du capteur de température (4).

4. Compresseur selon l'une quelconque des revendications 1 à 3,
**caractérisé en ce que**
le système de support (3) est découpé dans une pièce de tôle et est conçu en étant fabriqué par déformation.

5. Compresseur selon l'une quelconque des revendications 1 à 3,
**caractérisé en ce que**
le système de support (3) est conçu en étant fabriqué en fil métallique.

6. Compresseur selon l'une quelconque des revendications 1 à 5,
**caractérisé en ce qu'**
au moins l'une des sections (3.1, 3.2) comporte un orifice (3.3) destiné à recevoir le système de fixation (2).

7. Compresseur selon l'une quelconque des revendications 1 à 6,
**caractérisé en ce qu'**
au moins l'une des sections (3.1, 3.2) est conçue sous la forme d'un crochet ouvert sur un côté.

8. Compresseur selon l'une quelconque des revendications 1 à 7,
**caractérisé en ce que**
le capteur de température (4) est conçu en étant fixé par un élément de logement (5) sur le système de support (3).

9. Compresseur selon la revendication 8,
**caractérisé en ce que**
l'élément de logement (5) comporte une fente de logement (5.1) adaptée à la forme du capteur de température (4) et ouverte en direction de la paroi (1.1) pour le capteur de température (4).
